**Europäisches Patentamt**

**European Patent Office**

**Office européen des brevets**

(11) Numéro de publication : **0 468 829 A1**

# (12) DEMANDE DE BREVET EUROPEEN

(21) Numéro de dépôt : **91401690.2**

(22) Date de dépôt : **21.06.91**

(51) Int. Cl.⁵ : **G01B 13/22**

(30) Priorité : **26.06.90 FR 9008001**

(43) Date de publication de la demande :
**29.01.92 Bulletin 92/05**

(84) Etats contractants désignés :
**AT BE CH DE DK ES FR GB GR IT LI LU NL SE**

(71) Demandeur : **SOCIETE D'ETUDES ET DE RECHERCHES DE L'ECOLE NATIONALE SUPERIEURE D'ARTS ET METIERS en abrégé S E R A M**
**151, Boulevard de l'Hôpital**
**F-75013 Paris (FR)**

(72) Inventeur : **Driviere, Jacques**
**22 avenue Mistral**
**F-77270 Villeparisis (FR)**
Inventeur : **Bielle, Jacques**
**6bis boulevard Grandthille**
**F-51000 Chalons Sur Marne (FR)**

(74) Mandataire : **Robert, Jean-Pierre et al**
**CABINET BOETTCHER 23, rue la Boétie**
**F-75008 Paris (FR)**

(54) **Appareil pour surveiller la qualité de l'état de surface d'une pièce.**

㊀ L'appareil comprend un conduit de circulation d'air (17) dont la partie terminale est ménagée dans une buse (5) dont la surface frontale (10) est dressée pour pouvoir être appliquée sur la surface (2) à explorer et former avec cette surface (2) une fuite traversée par un débit d'air fonction de l'état de la surface de la pièce, et un moyen de mesurage du débit d'air passant par la fuite. La buse (5) définit un conduit de circulation d'air annulaire (9) au niveau de la surface frontale (10) dressée de la buse (5), la partie (8) de la buse intérieure au conduit (9) annulaire de circulation d'air comportant une conduite (11,12,13) reliée à l'atmosphère.

EP 0 468 829 A1

$$\underline{FIG\_1}$$

La présente invention concerne un appareil pour surveiller la régularité de la qualité de l'état d'une surface déterminée au long de la fabrication d'une série de pièces comportant cette surface.

L'état d'une surface conditionne la qualité de l'appui d'un corps sur celle-ci, notamment en ce qui concerne l'étanchéité réalisée entre cette surface et ce corps.

Il existe une discipline de la métrologie qui traite particulièrement des états de surface. Il s'agit de la profilométrie qui a pour objet de relever, suivant une direction de la surface, le profil de sa forme et de ses irrégularités dites ondulations et rugosités, conformément à une norme française E-05-015. Parmi les appareils mis en oeuvre pour effectuer ces relevés (profilomètres) certains comportent un palpeur de contact (pointe plus ou moins fine) d'autres utilisent un rayon de lumière cohérente dont on interprète le signal en retour par interférométrie.

Les résultats de ces relevés sont mémorisés soit par voie graphique soit sous forme numérique dans des mémoires et constituent l'image la plus approchée des profils réels. Par traitement du pas et des profondeurs des irrégularités, on obtient des paramètres de profils mesurés.

Par le calcul, en fonction des méthodes de relevé, on accède à des valeurs de paramètres normalisés.

En procédant à une série de relevés de profils parallèles et faiblement espacés les uns des autres, on obtient une image tridimensionnelle de l'aire de surface qui a été explorée.

La profilométrie requiert la mise en oeuvre d'appareils qui ne sont pas adaptés à la surveillance de la qualité des pièces, en ce qui concerne leur état de surface, dans un atelier de production, en raison notamment de leur sensibilité aux vibrations mécaniques et acoustiques.

Il existe d'autres appareils délivrant des informations relatives à l'état d'une surface, on mentionnera les appareils capacimétriques dans lesquels la pièce constitue une plaque d'une capacité électrique et les appareils d'ateliers, essentiellement pneumatiques, dont le principe réside dans la mesure des écoulements soniques d'air au travers de fuites dont l'une est constituée entre la pièce et l'orifice de mesure de l'appareil.

Les appareils capacimétriques sont d'emploi limité aux surfaces électriquement conductrices et sont particulièrement sensibles aux particules métalliques libres qui peuvent siéger sur la surface après un mauvais nettoyage. En outre, ils ne sont pas sensibles à l'ondulation (défaut de forme) et leur usage au moyen d'un robot n'est pas envisageable.

Les appareils pneumatiques sont malcommodes d'emploi, en raison des difficultés à localiser le capteur sur la surface. Ils sont lents à délivrer une information compte tenu des systèmes manométriques qu'ils mettent en oeuvre. Enfin, la qualité de surface des parois de la buse influence les mesures manométriques.

Il existe aujourd'hui un besoin de surveiller la régularité d'une production en ce qui concerne la qualité des états de surface et ce sur le site même de production.

L'invention entend répondre à ce besoin en proposant un dispositif qui peut établir la comparaison des caractéristiques géométriques des rugosités et ondulations de plusieurs surfaces et donc apprécier la qualité d'un état de surface par rapport à l'état de surface de référence, qui possède des organes adaptés à sa mise en oeuvre par des manipulations automatiques garantissant une application correcte de l'appareil sur la pièce à contrôler et ne demandant pas de réglage préalable du système de mesurage.

A cet effet, l'invention a donc pour objet un appareil pour surveiller la qualité de l'état de surface d'une pièce comprenant un conduit de circulation d'air dont la partie terminale est ménagée dans une buse dont la surface frontale est finement dressée pour pouvoir être appliquée sur la surface à explorer et former avec cette surface une fuite traversée par un débit d'air fonction de l'état de surface de la pièce, et un moyen de mesure du débit d'air s'échappant par la fuite, dans lequel la buse définit un conduit de circulation d'air annulaire au niveau de la surface frontale dressée, la partie intérieure de la buse au conduit annulaire de circulation d'air comportant un conduit de collecte de l'air de fuite s'échappant vers le centre, relié à l'atmosphère. On notera que le débit de fuite, étant donné les dispositions géométriques et dimensionnelles de l'appareil, reste dans le domaine des écoulements subsoniques incompressibles.

Dans un mode de réalisation préféré, l'appareil comprend un corps extérieur de support de la buse sensiblement cylindrique dans lequel la buse est attelée par des moyens élastiques souples exerçant sur cette dernière, quand le corps est placé en appui sur la surface à contrôler, une force d'application de la buse en direction de cette surface.

De manière avantageuse, les moyens élastiques souples sont constitués par au moins une membrane élastiquement déformable attelée entre la buse et le support extérieur, délimitant dans ce dernier une chambre étanche comportant au travers de la paroi de support des moyens de raccordement à une source de gaz comprimé.

Enfin, on mentionnera que le moyen de mesure du débit d'air de fuite est constitué par un anémomètre à fil chaud.

L'invention sera mieux comprise au cours de la description donnée ci-après à titre indicatif qui permettra d'en dégager les avantages et les caractéristiques secondaires.

Il sera fait référence aux dessins annexés dans lesquels :

    – la figure 1 est une vue en coupe axiale de la buse d'extrémité du dispositif selon l'invention,
– la figure 2 est une vue en coupe axiale d'une variante de réalisation de cette buse,
– la figure 3 est un schéma de l'ensemble de l'appareil.

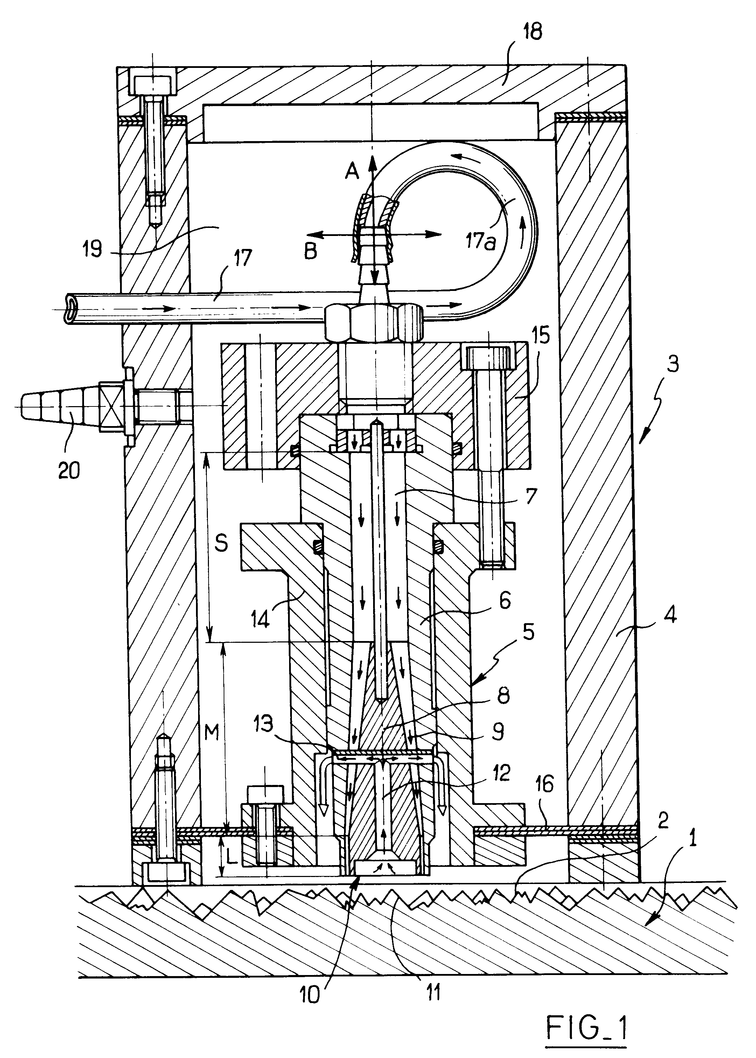

A la figure 1, on a représenté une pièce 1 à contrôler présentant une surface horizontale 2 rugueuse. Le capteur 3 de l'appareil selon l'invention comporte un boîtier externe 4 sensiblement cylindrique, formant support pour une buse 5.

Telle que représentée, cette buse 5 comporte un manchon 6 cylindrique interne qui présente un canal 7 de section constante en partie supérieure S, de section croissante dans sa partie médiane M, et de section à nouveau constante dans sa partie inférieure L.

A l'intérieur de ce canal, un noyau 8 occupe le centre de la section dans les zones M et L de manière à délimiter un conduit annulaire 9 dont la section varie dans la zone M selon une loi bien déterminée pour rester constante dans la zone L. Les dimensions des sections de passage du canal S ainsi que la longueur des zones M et L ont été déterminées par l'expérience pour disposer d'un courant gazeux à la sortie du canal annulaire au niveau de la face d'extrémité 10 de la buse, le plus homogène possible et exempt de turbulences.

Le noyau 8 est lui-même pourvu d'un lamage inférieur 11 dans lequel débouche un conduit central 12 qui débouche sur un conduit radial 13 traversant la zone médiane M du conduit 9.

Le manchon 6 est bridé entre deux pièces extérieures 14 et 15 qui servent, pour l'une à la liaison de la buse au boîtier 4 et pour l'autre, au raccordement de cette dernière à un conduit d'amenée d'un gaz (air) sous pression.

La liaison de la buse au boîtier 4 est assurée par l'intermédiaire d'une membrane déformable 16 en forme d'anneau, fixée par sa périphérie extérieure à la base du boîtier 4 et par sa périphérie intérieure, à la base de la pièce extérieure 14. Cette membrane maintient donc élastiquement la buse à l'intérieur du boîtier 4, en assurant à cette buse une liberté de mouvement relativement au boîtier dans la direction axiale et en orientation par rapport à cette direction axiale.

Le conduit d'amenée 17 du gaz sous pression dans le canal 9 de la buse est choisi en un matériau souple et conformé en une boucle 17a avant son implantation dans la pièce 15 pour préserver un maximum de liberté à la buse 5 dans le sens des flèches A et B.

Le boîtier 4 est fermé en partie supérieure par un couvercle étanche 18. On a ainsi défini à l'intérieur du boîtier 4 une chambre fermée 19 susceptible d'être raccordée à une source d'air comprimé par un embout 20.

L'utilisation de ce capteur s'opère en plaçant le boîtier 4 sur la surface 2. On gonfle ensuite la chambre 19 ce qui a pour résultat d'appliquer la face frontale 10 de la buse sur cette surface 2. Cette application est réalisée de manière satisfaisante car la buse reposera au moins sur trois points hauts de cette surface même si ces trois points définissent un plan qui n'est pas tout à fait confondu avec le plan moyen de la surface 2 (qui correspond sensiblement au plan sur lequel est appuyé sur le boîtier 4 dont le diamètre est grand par rapport aux irrégularités de surface).

L'air circulant dans le conduit 17 puis dans le conduit 9 s'échappe par les fuites existant entre les irrégularités de la surface 2 sous la face frontale 10 de la buse. Le débit de cet air est bien entendu en relation avec des caractéristiques géométriques de ces irrégularités. En mesurant ce débit, comme cela sera décrit ci-dessous, on dispose d'une information qui peut être exploitée par comparaison avec une information de même nature obtenue par l'exploration d'une surface de référence ou exploitée intrinsèquement pour déterminer, par des calculs ultérieurs, l'ordre de grandeur de certains paramètres. On comprend qu'un tel dispositif est de manipulation extrêmement simple et de ce fait peut être attelé à l'extrémité du bras d'un robot.

En outre, le débit de fuite est deux fois plus important que si la fuite n'avait été que radialement dirigée vers l'extérieur, toutes choses égales par ailleurs, du fait de la chambre 11 et des canaux 12 et 13 d'évacuation de l'air au centre de la buse. Cette disposition est intéressante car elle permet de réduire les dimensions utiles du capteur (le diamètre extérieur de la buse) et donc de procéder à des contrôles sur des surfaces relativement petites (on citera par exemple les plans de joint bloc moteur/culasse dans l'industrie automobile dont la surface est très travaillée et généralement étroite) tout en disposant d'un débit acceptable correspondant, au niveau de sa mesure, à une plage de régime d'écoulement qui ne soit pas critique. Ainsi, les mesures sont fiables et répétitives.

Par ailleurs, cette réduction des dimensions du capteur permet d'atteindre des surfaces jusqu'ici impossibles à surveiller telles par exemple que des portées de joints situées au fond d'embrèvements profonds, comme c'est le cas notamment en robinetterie.

Enfin, le dispositif pneumatique d'application de la buse permet d'assurer une force d'application constante d'une mesure à l'autre, conservant ainsi comparables les conditions de mesure d'une pièce à l'autre.

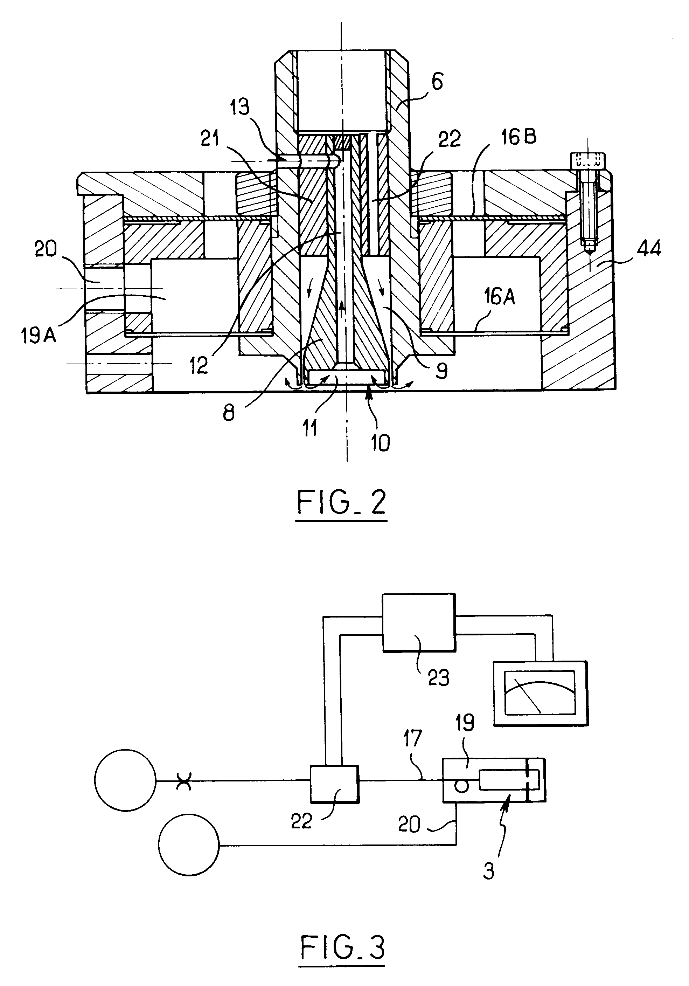

La variante de réalisation représentée à la figure 2 diffère de la précédente par le fait que la chambre étanche 19A est ici limitée dans un support 4A très court par deux membranes 16A et 16B qui présentent des surfaces inégales, exposées à la pression de gonflage. Ainsi, l'air comprimé arrivant en 20, plaque la buse vers le bas. L'alimentation en air comprimé de la buse peut s'opérer par un conduit très souple n'engendrant qu'un très faible effort sur cette dernière. On remarquera également la présence d'un diffuseur 21 dans le conduit 9 pour régulariser la circulation d'air aux approches de la sortie de la buse, constitué par une pièce comportant des canaux 22 régulièrement répartis dans le canal 9. Ce diffuseur 21 sert à centrer la pièce interne 8 de la buse dans la pièce externe 6 et comprend les canaux 13 de mise à l'atmosphère de l'espace 11.

La forme de la fente annulaire de sortie d'air de la buse peut être circulaire ce qui permet d'explorer une surface sans direction privilégiée. On peut cependant imaginer sans sortir du cadre de l'invention, un buse dont l'ouverture soit rectangulaire, la fuite, à rugosité égale étant plus importante le long des grands côtés que des petits côtés. En procédant, sur une même surface, à deux mesures et en changeant l'orientation de la buse entre les deux mesures, on peut constater des différences entre les débits de fuite et ainsi en déduire l'orientation des irrégularités (par exemple née du mode d'action de l'outil ayant réalisé la surface testée).

A la figure 3, on a représenté schématiquement l'ensemble de l'appareil selon l'invention. La mesure du débit d'air de fuite est réalisée par un anémomètre à fil chaud 22 dont le principe est connu en lui-même. On rappellera succintement qu'il comporte un fil résistif placé dans un écoulement d'air et traversé par un courant. La tension aux bornes de ce fil, après une phase transitoire, reste constante si la vitesse de l'air est constante. La loi reliant vitesse de l'air et tension est dite loi de King. Comme la vitesse d'écoulement est liée au débit, donc au débit de fuite, donc aux caractéristiques des irrégularités de la surface explorée, l'exploitation de la variation de tension permet une appréciation des caractéristiques géométriques de l'ondulation et de la rugosité. On voit donc, sur la figure 3, un schéma de l'appareil qui, outre le capteur 3, comporte un anémomètre à fil chaud 22. L'élément résistif est intégré dans un pont de Wheatstone 23 d'où l'on extrait la valeur de la mesure.

On signalera que le dispositif, selon l'invention, dans lequel on aurait dressé la surface frontale 10 de la buse avec une extrême précision, peut convenir au contrôle de portées de joints pour des "super-fluides" tel que l'hydrogène. Le gaz de mesure serait alors de l'hélium.

On mentionnera enfin une variante de réalisation non représentée qui consiste à aspirer l'air ambiant depuis l'extérieur dans le conduit annulaire 9, l'air s'écoulant entre la face dressée 10 de la buse et la pièce en provenance tant de l'espace extérieur que de l'espace intérieur à cette buse.

Cette variante peut présenter un intérêt pour la mesure de l'état de surface d'un matériau fragile et léger comme le polystyrène expansé, l'aspiration créant la force d'application de la pièce sur la buse.

## Revendications

1. Appareil pour surveiller la qualité de l'état de la surface (2) d'une pièce (1) comprenant un conduit de circulation d'air (17) dont la partie terminale est ménagée dans une buse (5) dont la surface frontale (10) est dressée pour pouvoir être appliquée sur la surface (2) à explorer et former avec cette surface (2) une fuite traversée par un débit d'air fonction de l'état de la surface de la pièce, et un moyen de mesurage du débit d'air passant par la fuite, caractérisé en ce que la buse (5) définit un conduit de circulation d'air annulaire (9) au niveau de la surface frontale (10) dressée de la buse (5), la partie (8) de la buse intérieure au conduit (9) annulaire de circulation d'air comportant une conduite (11, 12, 13) reliée à l'atmosphère.

2. Appareil selon la revendication 1, caractérisé en ce que le débit d'air passant par la fuite s'échappe de la buse.

3. Appareil selon la revendication 1, caractérisé en ce que le débit d'air entre dans la buse.

4. Appareil selon l'une des revendications précédentes, caractérisé en ce qu'il comprend un corps extérieur (4) de support de la buse (5) sensiblement cylindrique, dans lequel la buse (5) est attelée par des moyens élastiques souples exerçant sur cette dernière quand le corps (14) est placé en appui sur la surface (2) à contrôler, une force d'application de la buse (5) en direction de cette surface (2).

5. Appareil selon la revendication 4, caractérisé en ce que les moyens élastiques souples sont constitués par au moins une membrane (16) élastiquement déformable attelée entre la buse (5) et le support (4) extérieur délimitant dans le support une chambre étanche (19) qui comportent au travers de la paroi du support des moyens de raccordement (20) à une source de gaz comprimé.

6. Appareil selon la revendication 5, caractérisé en ce que les moyens élastiques susdits comprennent deux membranes (16A, 16B) parallèles attelées entre le support (4) et la buse (5) délimitant entre elles la chambre étanche (19A), la membrane supérieure (16B) possédant une surface exposée au gaz sous pression inférieure à celle que présente la membrane inférieure (16A).

7. Appareil selon l'une quelconque des revendications précédentes, caractérisé en ce que la section annulaire de sortie d'air de la buse (5) est circulaire.

8. Appareil selon l'une quelconque des revendications précédentes, caractérisé en ce que le conduit (9) annulaire dans la buse comprend une partie (M) à section décroissante dans le sens de la circulation du courant d'air, prolongée par une partie terminale (L) à section constante.

9. Appareil selon l'une quelconque des revendications précédentes, caractérisé en ce que la buse (5) est raccordée au conduit de circulation d'air par une portion de conduit souple (17a) autorisant sans contrainte importante un mouvement axial (A) et angulaire (B) de la buse (5) par rapport au support (4).

10. Appareil selon l'une quelconque des revendications précédentes, caractérisé en ce que le moyen de mesure du débit d'air de fuite est constitué par un anémomètre à fil chaud (22).

FIG_1

FIG. 2

FIG. 3

**EP 0 468 829 A1**

Office européen
des brevets

# RAPPORT DE RECHERCHE EUROPEENNE

Numero de la demande

EP 91 40 1690

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | US-A-3 747 395 (C.R. CHERMAN) <br> * abrégé; revendication 1; figures 1-3 * <br> --- | 1 | G 01 B 13/22 |
| | FR-A-1 362 970 (PILKINGTON BROTHERS LIMITED) <br> * pages 2-3; figures 1,2 * <br> --- | 1 | |
| A | DE-C- 879 466 (SIEMENS & HALSKE AKTIENGESELLSCHAFT) <br> * page 2; figures 1-6 * <br> ----- | 1 | |

**DOMAINES TECHNIQUES RECHERCHES (Int. Cl.5)**

G 01 B

Le présent rapport a été établi pour toutes les revendications

| Lieu de la recherche | Date d'achèvement de la recherche | Examinateur |
|---|---|---|
| BERLIN | 20-09-1991 | VORROPOULOS G |

**CATEGORIE DES DOCUMENTS CITES**

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)

9